**Europäisches Patentamt**

**European Patent Office**

**Office européen des brevets**

(19)

(11) Veröffentlichungsnummer : **0 069 060**
**B1**

(12)  **EUROPÄISCHE PATENTSCHRIFT**

(45) Veröffentlichungstag der Patentschrift :
**25.03.87**

(51) Int. Cl.⁴ : **F 16 M 11/04**

(21) Anmeldenummer : **82810248.3**

(22) Anmeldetag : **10.06.82**

(54) **Stellfuss für geodätische Instrumente.**

(30) Priorität : **18.06.81 CH 4026/81**

(43) Veröffentlichungstag der Anmeldung :
**05.01.83 Patentblatt 83/01**

(45) Bekanntmachung des Hinweises auf die Patenterteilung : **25.03.87 Patentblatt 87/13**

(84) Benannte Vertragsstaaten :
**DE SE**

(56) Entgegenhaltungen :
**CH-A-  447 632**
**DE-A- 2 558 759**
**DE-B- 1 269 370**
**DE-C-  932 748**

(73) Patentinhaber : **KERN & CO. AG Werke für Präzisionsmechanik Optik und Elektronik**

**CH-5001 Aarau (CH)**

(72) Erfinder : **Hoffmann, Dieter**
**Steinfeldstrasse 20**
**CH-5033 Buchs/AG (CH)**

(74) Vertreter : **Seeger, Jan**
**c/o Kern & Co. AG**
**CH-5001 Aarau (CH)**

EP 0 069 060 B1

## Beschreibung

Die Erfindung betrifft einen Stellfuss für geodätische Instrumente mit einem horizontierbaren Oberteil mit einer zentralen Einzelbuchse zur Aufnahme des Instrumentes.

Bekannte derartige Stellfüsse sind entweder fest mit dem geodätischen Instrument verbunden oder sie weisen eine Aufnahme für solche Instrumente auf. Bei dem Vermessungsinstrument gemäss DE-A-2 558 759 bildet ein Horizontiersockel anstelle eines Dreifusses den Unterbau des Instrumentes und kann auf einen ebenen Stativkopf aufgesetzt werden. Der Instrumentenoberteil gleitet beim Verkippen mit einer ringförmigen sphärischen Fläche auf einer entsprechenden Fläche einer unteren Aufsetzplatte.

Der Stellfuss gemäss DE-B-1 269 370 ist vom Instrument abnehmbar und über Stützbolzen auf einer Stativkopfplatte zum verdrehungsfreien Zentrieren verschieblich gelagert, wobei eine Verdrehung durch eine zwischen Stellfuss und Stativkopfplatte angeordnete Führungsplatte verhindert wird. Diese Führungsplatte weist Schlitze auf, in denen die Stützbolzen und an der Stativkopfplatte befestigte Stifte gleiten. Auch der Kugelfuss für Vermessungsinstrumente gemäss CH-PS-447 632 ist vom Instrument abnehmbar und weist eine Kombination eines Kugelgelenkes zur Grobhorizontierung mit einem Dreifuss zur Feinhorizontierung auf. Der Dreifuss ist über eine kreisringförmige Metallmembran mit einer unteren Aufsetzplatte verdrehungssteif verbunden. Zur Aufnahme des zu horizontierenden Vermessungsinstrumentes über einen genormten Zapfen (DIN-Norm 18 719) ist eine Buchse mit radial angeordneter Klemmschraube im Dreifuss vorgesehen.

Auch der Dreifuss gemäss DE-C-932 748 weist ein in seiner Mitte befestigtes, zur Aufnahme eines Drehzapfens von geodätischen Instrumenten dienendes Rohrstück auf. Dieses Rohrstück ist in dem Dreifuss drehbar gelagert, und es sind Mittel vorgesehen, mit denen eine Feinschwenkbewegung auf das Rohrstück übertragen werden kann.

Der Kugelfuss gemäss CH-PS-447 632 ist lediglich zur Aufnahme von Vermessungsinstrumenten mit Normzapfen geeignet. Für andere Instrumente sind andere Horizontiersockel bekannt, die aber keine Normzapfen aufnehmen können. So besteht ein bekannter Horizontiersockel für Vermessungsinstrumente der Firma Wild-Heerbrugg, Schweiz, aus einer Instrumentenaufnahme, die über drei Horizontierschrauben auf einer Aufsetzplatte gelagert ist. Die Instrumentenaufnahme weist drei Löcher zur Aufnahme dreier Zapfen am Instrument auf. Zur Klemmung der drei Zapfen weist die Aufnahme einen um ihr Zentrum drehbaren Ring mit drei Nasen und einem Drehtrieb auf.

Aufgabe der Erfindung ist es, einen Stellfuss für geodätische Instrumente zu schaffen, der sowohl für Instrumente mit Normzapfen als auch für andere Instrumente geeignet ist. Dies wird gemäss dem Kennzeichen des Patentanspruches 1 erreicht. Eine vorteilhafte Ausführungsform sieht vor, dass das Oberteil einen um dessen Achse drehbaren Ring mit einer Vorrichtung zur manuellen Verdrehung umfasst, der eine für eine Klemmung des Einzelzapfens geeignete Kurve, sowie zur Klemmung der weiteren Zapfen geeignete Nasen aufweist.

Eine weitere vorteilhafte Ausführungsform sieht vor, dass das Oberteil den um dessen Achse drehbaren Ring mit der Vorrichtung zur manuellen Verdrehung, sowie einen zweiten, mit dem Ring drehstarr aber radial verschieblich verbundenen Ring umfasst, wobei der zweite Ring die für die Klemmung des Einzelzapfens geeignete Kurve und der Ring die zur Klemmung der weiteren Zapfen geeigneten Nasen (18) aufweist. Weitere vorteilhafte Ausführungsformen sind in den Patentansprüchen 4 bis 7 gekennzeichnet.

Die Erfindung wird nun anhand eines in der Zeichnung dargestellten Ausführungsbeispieles näher erläutert. Es zeigt:

Figur 1 einen Teilschnitt durch einen Stellfuss für geodätische Instrumente und

Figur 2 eine Aufsicht auf den in Fig. 1 dargestellten Stellfuss.

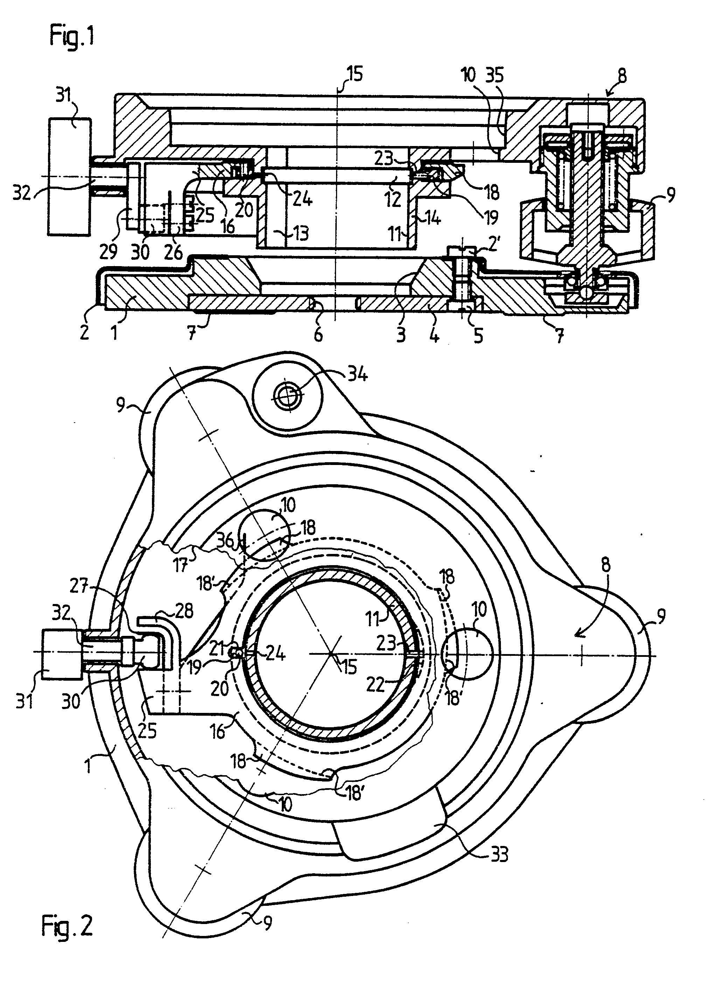

Der in Fig. 1 und Fig. 2 dargestellte Stellfuss weist als Grundplatte eine Aufsetzplatte 1 auf, welche mit einer Verkleidung 2 und einer zentralen Oeffnung 3 versehen ist. Die Verkleidung 2 ist mit Schrauben 2' auf die Aufsetzplatte 1 derart aufgespannt, dass sie gleichzeitig auch am Umfang gelagerte Stellschrauben 9 in der Grundplatte fixiert. Am unteren Ende der Oeffnung 3 ist ein kreisringförmiges auswechselbares Teil 4 mit Schrauben 5 eingesetzt, das ein zentrales Befestigungsgewinde 6 zur Verschraubung auf einer nicht dargestellten Basis aufweist. Zur definierten Auflage auf einer solchen Basis ist die Aufsetzplatte 1 mit drei symmetrisch angeordneten Füssen 7 versehen.

Auf der Aufsetzplatte 1 ist ein Oberteil 8 durch drei Stellschrauben 9 horizontierbar gelagert, von denen im Schnitt gemäss Fig. 1 nur eine Schraube dargestellt ist. Das Oberteil 8 weist zur Aufnahme von geodätischen Instrumenten einerseits drei Buchsen oder Langlöcher 10 in Kombination mit einer Zentrierbuchse 35 am Umfang und andererseits eine zentrale Einzelbuchse 11 auf. Die Langlöcher 10 weisen eine geringe radiale Längsausdehnung auf und dienen zur Aufnahme von drei entsprechenden, am geodätischen Gerät (nicht mit dargestellt) befestigten Zapfen. Die zentrale Einzelbuchse 11 ist in ihrem oberen Bereich mit einer Innennut 12 versehen, in die über etwa 9/10 ihres Umfanges eine offene Ringfeder (nicht gezeichnet) eingelegt ist. Die Buchse 11 entspricht der DIN-Norm 18 719. Sie weist auf etwa 1/4 ihres Umfanges in einem Bereich 13 (Fig. 1) einen verkleinerten Radius auf, der zur definierten Anlage bei der Klemmung eines entsprechenden, am

geodätischen Gerät befestigten Zapfens dient. Zur besseren Halterung solcher an sich bekannter Zapfen weist das Oberteil 8 um die Buchse 11 herum einen verlängerten Fortsatz 14 auf.

Zur Klemmung der Zapfen ist nun erfindungsgemäss ein um die Achse 15 des Oberteils 8 mit radialem Spiel drehbarer Ring 16 vorgesehen, der in Fig. 2 infolge der im Bereich 17 nur teilweisen Darstellung des Oberteils 8 sichtbar und im übrigen Bereich durch gebrochene Linien dargestellt ist. Wie aus Fig. 1 ersichtlich, ist der Ring 16 in einer äusseren Ringnut des Fortsatzes 14 achsial gelagert. Zur Klemmung von in die Langlöcher 10 eingeführten Zapfen weist der Ring 16 an seinem Aussenumfang drei Nasen 18 auf (Fig. 2). Diese Nasen 18 sind längs des Umfanges keilförmig ausgebildet, wie dies in Fig. 2 durch die gebrochenen Linien 18' angedeutet ist, und greifen beim Drehen des Ringes 16 in in den Zapfen vorgesehene Kerben ein, wobei das aufgesetzte geodätische Gerät in der Zentrierbuchse 35 zentriert und mittels der Zapfen festgeklemmt wird.

Auf seinem inneren Umfang weist der Ring 16 über einen Teil seiner Breite eine Ausnehmung auf, in die ein zweiter, kleinerer Ring 19 mit radialem Spiel eingesetzt ist. Der Ring 19 ist mit einem zur Achse 15 parallelen Stift 20 versehen, der von unten derart in eine U-förmige Ausnehmung 21 des Ringes 16 eingreift, dass bei einer Drehung des Ringes 16 der Ring 19 mitgenommen wird. Der Ring 19 weist an seinem inneren Umfang eine in Fig. 2 durch die gebrochene Linie 22 dargestellte Kurve auf. An dieser Kurve 22 liegt ein, in einer radialen Bohrung im Fortsatz 14 geführter Stift 23 an, der mit der in der Innennut 12 befindlichen Ringfeder in Kontakt steht. Gegenüber dem beweglichen Stift 23 befindet sich in der Nut 12 im Fortsatz 14 noch ein fester Stift 24, der ein Abwandern der Oeffnung der Ringfeder verhindert.

Aus der bisherigen Beschreibung ist ersichtlich, dass eine Drehung des Ringes 16 ein Mitdrehen des Ringes 19 und damit durch die Kurve 22 eine Verschiebung des Stiftes 23 nach innen bewirkt. Ist ein entsprechender Zapfen in die Buchse 11 eingeführt, so wird dieser also über Stift 23 durch die in Nut 12 befindliche Ringfeder gegen den Bereich 13 der Buchse 11 festgeklemmt.

Zur Drehung des Ringes 16 besitzt dieser einen Fortsatz 25 mit einem abgewinkelten, zur Achse 15 parallelen Arm 26. Am Arm 26 ist eine Winkelfeder 27 mit Begrenzungswinkel 28 angeschraubt. Damit ist zwischen Arm 26 und Feder 27 eine zur Achse 15 parallele Führungsbahn für einen, an einem Hebel 29 drehbar befestigten Triebklotz 30 gegeben. Der Hebel 29 ist mittels eines Drehknebels 31 um eine Achse 32 schwenkbar, wodurch der Ring 16 die zur Klemmung erforderliche Drehung erfährt. Zusammen mit der Winkelfeder 27 ist am Arm 26 noch eine Blattfeder 36 befestigt, die bis zu einer der Nasen 18 des Ringes 16 reicht und beim Klemmvorgang durch seitlichen Druck auf den in ein Langloch 10 eingeführten Gerätezapfen für eine definierte Anlage des Zapfens am Langloch sorgt.

Das Oberteil 8 weist ferner eine Ausnehmung 33 zur Aufnahme einer üblichen Nase am geodätischen Instrument, sowie eine Dosenlibelle 34 zur Horizontierung mittels der Stellschrauben 9 auf. Beim Betätigen des Drehknebels 31 wird also erfindungsgemäss eine Doppelfunktion erreicht, nämlich eine Klemmung eines in die zentrale Einzelbuchse 11 eingesetzten Normzapfens oder eine Klemmung von drei in die Langlöcher 10 eingeführten Gerätezapfen, die an einem in die Zentrierbuchse 35 eingeführten geräteseitigen Zentrierzapfen befestigt sind.

Durch verschiedene anschraubbare Teile 4 wird ausserdem erreicht, dass der Stellfuss universal mit allen bekannten Stativen und Pfeilergrundplatten kombinierbar ist.

**Patentansprüche**

1. Stellfuss für geodätische Instrumente mit einem horizontierbaren Oberteil (8) mit einer zentralen Einzelbuchse (11) zur Aufnahme des Instrumentes, dadurch gekennzeichnet, dass die Einzelbuchse einen entsprechenden Einzelzapfen des Instrumentes aufnimmt und dass um die zentrale Einzelbuchse herum mehrere weitere Buchsen (10) zur Aufnahme des Instrumentes mit mehreren entsprechenden Zapfen sowie eine zugehörige Zentrierbuchse (35) angeordnet sind.

2. Stellfuss nach Anspruch 1, dadurch gekennzeichnet, dass das Oberteil (8) einen um dessen Achse (15) drehbaren Ring (16) mit einer Vorrichtung (25-32) zur manuellen Verdrehung umfasst, der eine für eine Klemmung des Einzelzapfens geeignete Kurve (22), sowie zur Klemmung der weiteren Zapfen geeignete Nasen (18) aufweist.

3. Stellfuss nach Anspruch 1, dadurch gekennzeichnet, dass das Oberteil (8) den um dessen Achse (15) drehbaren Ring (16) mit der Vorrichtung (25-32) zur manuellen Verdrehung, sowie einen zweiten, mit dem Ring (16) drehstarr aber radial verschieblich verbundenen Ring (19) umfasst, wobei der zweite Ring die für die Klemmung des Einzelzapfens geeignete Kurve (22) und der Ring (16) die zur Klemmung der weiteren Zapfen geeigneten Nasen (18) aufweist.

4. Stellfuss nach Anspruch 2 oder 3, dadurch gekennzeichnet, dass die zentrale Einzelbuchse (11) eine Innennut (12) mit eingelegter Ringfeder, sowie am Umfang der Nut (12) einen radial verschieblichen Stift (23) aufweist, der infolge einer Einwirkung durch die Kurve (22) den eingeführten Einzelzapfen des Instrumentes über die Ringfeder bei der Verdrehung festklemmt.

5. Stellfuss nach einem der Ansprüche 1 bis 4, gekennzeichnet durch eine Aufsetzplatte (1), auf der das Oberteil (8) mittels dreier Stellschrauben (9) gelagert und horizontierbar ist, und welche auswechselbare Teile (4) für verschiedene Befestigungsmöglichkeiten auf einer Unterlage aufweist.

6. Stellfuss nach Anspruch 5, dadurch gekennzeichnet, dass das Oberteil (8) mit dem Instrument verschraubbar ist.

7. Stellfuss nach Anspruch 5, dadurch gekennzeichnet, dass die auswechselbaren Teile (4) in der Aufsetzplatte (1) zentral angeordnet sind.

## Claims

1. Adjusting base for geodetic instruments with a leveling top (8) having a central single bearing bush (11) to receive an instrument, thereby characterized, that the single bearing bush receives a corresponding single trunnion of the instrument and that several other bearing bushes (10) to receive the instrument with several corresponding trunnions as well as a corresponding centering bush (35) are provided about the central single bearing bush.

2. Adjusting base according to claim 1, thereby characterized, that the top (8) comprises a ring (16) rotatable about its axis (15) and a device (25-32) for manually rotating said ring (16), said ring (16) having a cam (22) suitable for clamping the single trunnion as well as catches (18) suitable for clamping the other trunnions.

3. Adjusting base according to claim 1, thereby characterized that the top (8) comprises the ring (16) rotatable about its axis (15), together with the device (25-32) for manually rotating, as well as a second ring (19) joined to the ring (16) in a manner stiff against rotation but radially movable, the second ring having the cam (22) suitable for clamping the single trunnion, and the ring (16) having the catches (18) suitable for clamping the other trunnions.

4. Adjusting base according to claim 2 or 3, thereby characterized, that the central single bearing bush (11) has an inner groove (12) with an annular spring provided therein and said bush on the circumference of its groove (12) has a radially movable peg (23) which clamps an introduced single trunnion of the instrument on rotation *via* the annular spring due to an action by the cam (22).

5. Adjusting base according to one of claims 1 to 4, characterized by a base-plate (1) carrying the top (8) by means of three adjusting screws (9) so that it may be levelled, and the base plate (1) having exchangeable parts (4) suitable for a number of different mounting devices on a base.

6. Adjusting base according to claim 5, thereby characterized, that the top (8) may be screwed to the instrument.

7. Adjusting base according to claim 5, thereby characterized, that the exchangeable parts (4) are arranged centrally within the base plate (1).

## Revendications

1. Base de réglage pour des instruments géodésiques avec une partie supérieure nivellable (8) ayant une douille centrale individuelle (11) pour recevoir l'instrument, caractérisée par le fait que la douille individuelle reçoit un pivot individuel correspondant de l'instrument, et caractérisée par le fait que plusieurs autres douilles (10) pour recevoir l'instrument avec plusieurs pivots correspondants sont disposées tout autour de la douille centrale individuelle ainsi qu'une douille de centrage (35) associée.

2. Base de réglage selon la revendication 1, caractérisée par le fait que la partie supérieure (8) comprend un anneau (16) pivotant autour de l'axe (15) de celle-là avec un dispositif (25-32) pour la rotation manuelle, ledit anneau (16) ayant une came radiale (22) propre à pincer le pivot individuel ainsi que des clavettes (18) propres à pincer les autres pivots.

3. Base de réglage selon la revendication 1, caractérisée par le fait que la partie supérieure (8) comprend l'anneau (16) pivotant autour de l'axe (15) de celle-là avec le dispositif (25-32) pour la rotation manuelle ainsi qu'un deuxième anneau (19) associé en rotation avec l'anneau (16), mais mobile en direction radiale, le deuxième anneau ayant la came radiale (22) propre à pincer le pivot individuel et l'anneau (16) ayant les clavettes (18) propres à pincer les autres pivots.

4. Base de réglage selon la revendication 2 ou 3, caractérisée par le fait que la douille centrale individuelle (11) présente une rainure intérieure (12) avec anneau-ressort inséré ainsi qu'une cheville (23) mobile en direction radiale au périmètre de la rainure (12), ladite cheville (23) pinçant le pivot individuel introduit de l'instrument au moyen de l'anneau-ressort lors de la rotation en conséquence de l'effet de la came radiale (22).

5. Base de réglage selon l'une des revendications 1 à 4, caractérisée par une plaque de base (1) sur laquelle est tenue la partie supérieure (8) au moyen de trois vis de calage (9) en manière nivellable, la plaque de base (1) présentant des parties échangeables (4) servant de plusieurs manières de fixage à une autre base.

6. Base de réglage selon la revendication 5, caractérisée par le fait que la partie supérieure (8) peut être vissée à l'instrument.

7. Base de réglage selon la revendication 5, caractérisée par le fait que les parties échangeables (4) sont centrées dans la plaque de base (1).

Fig.1

Fig.2